# EUROPÄISCHE PATENTANMELDUNG

(11) **EP 1 624 168 A2**
(43) Veröffentlichungstag der Anmeldung: **08.02.2006**
(21) Anmeldenummer: 05016590.1
(22) Anmeldetag: 29.07.2005
(51) Int. Cl.: F02B 37/16, F02B 37/22, F02D 9/10, F02D 41/02, F15B 11/12

(54) **Verfahren zur stufenlosen Stellungsregelung eines Pneumatikzylinders sowie Pneumatikzylinder**

(30) Priorität: 06.08.2004 DE 102004038398
(71) Anmelder: Technomatik GmbH & Co. KG, 83623 Dietramszell-Lochen (DE)
(72) Erfinder: Hartmann, Robert, 81739 München (DE)
(74) Vertreter: Appelt, Christian W.

(57) **Zusammenfassung**

Die Erfindung betrifft ein Verfahren zur stufenlosen Stellungsregelung eines Pneumatikzylinders, bei dem die Stellung des Kolbens im Pneumatikzylinders über seinen Betriebsweg zwischen zwei Endstellungen durch ein Zuführen und Abführen eines fluiden Mediums gesteuert wird, wobei das Zuführen und Abführen des fluiden Mediums über ein Ventilsystem erfolgt, das zwei Betriebsstellungen "Zuführen" und "Abführen" aufweist, wobei zum Einstellen einer Zwischenstellung des Pneumatikzylinders auf einen beliebigen Hub zwischen den Endstellungen über einen bestimmbaren Zeitraum das Ventilsystem mit solch einer hohen Frequenz zwischen den beiden Betriebsstellungen hin- und hergeschaltet wird, dass der Pneumatikzylinder im wesentlichen konstant in der Zwischenstellung verharrt oder um die Zwischenstellung oszilliert. Die Erfindung betrifft ferner einen entsprechenden Pneumatikzylinder.

## Beschreibung

Die vorliegende Erfindung betrifft ein Verfahren zur stufenlosen Stellungsregelung eines Pneumatikzylinders, bei dem die Stellung des Kolbens im Pneumatikzylinders über seinen Betriebsweg zwischen zwei Endstellungen durch ein Zuführen und Abführen eines fluiden Mediums gesteuert wird, sowie einen entsprechenden Pneumatikzylinder mit stufenloser Stellungsregelung. Die Erfindung betrifft ferner eine Motorbremse, eine Turboladerverstellung sowie ein Abgasrückführungssystem mit einem Pneumatikzylinder mit stufenloser Stellungsregelung.

Pneumatikzylinder sind im Stand der Technik in unterschiedlichen Ausführungen und für mannigfaltige Anwendungen, insbesondere im Kraftfahrzeugbereich bekannt, und sind beispielsweise in der deutschen Offenlegungsschrift DE 197 16 564 A1 beschrieben.

Die Stellungsregelung solcher Druckluftzylinder erfolgt mittels eines Proportionalventils, bei dem der Volumenstrom durch das Ventil bevorzugt so geregelt wird, dass der Druck proportional zu der Stellgröße des Ventilgliedes ist. Ein solches Proportionalventil ist beispielsweise in der deutschen Offenlegungsschrift DE 101 55 387 A1 beschrieben.

Basierend auf diesem Stand der Technik ist es eine Aufgabe der vorliegenden Erfindung, ein Verfahren zur stufenlosen Stellungsregelung eines Pneumatikzylinders sowie einen Pneumatikzylinder mit stufenloser Sellungsregelung zur Verfügung zu stellen, der kostengünstig herzustellen ist und bei dem bevorzugt die Dimensionierung des Gesamtsystems klein gehalten werden kann.

Diese Aufgabe wird durch ein Verfahren gemäß Anspruch 1 und einen Pneumatikzylinder mit stufenloser Stellungsregelung gemäß Anspruch 8 gelöst. Die Ansprüche 2 bis 7 betreffen besonders vorteilhafte Realisierungen des erfindungsgemäßen Verfahrens gemäß Anspruch 1, die Ansprüche 9 bis 15 betreffen besonders vorteilhafte Ausführungsformen des Pneumatikzylinders gemäß Anspruch 8. Die Erfindung betrifft ferner eine Motorbremse gemäß Anspruch 16, eine Turboladerverstellung gemäß Anspruch 17 und ein Abgasrückführungssytem gemäß Anspruch 18, die jeweils einen Pneumatikzylinder mit stufenloser Stellungsregelung gemäß Anspruch 8 umfassen.

Erfindungsgemäß erfolgt das Zuführen und das Abführen eines fluiden Mediums, bei dem es sich bevorzugt um Druckluft handelt, über ein Ventilsystem, das zwei Betriebsstellungen aufweist, nämlich eine Betriebsstellung "Zuführen" und eine Betriebsstellung "Abführen". Zur Einstellung einer Zwischenstellung des Pneumatikzylinders mit stufenloser Stellungsregelung auf einen Hub zwischen den zwei Endstellungen über einen bestimmten, festlegbaren Zeitraum wird erfindungsgemäß das Ventilsystem mit solch einer hohen Frequenz zwischen den beiden Betriebsstellungen "Zuführen" und "Abführen" hin- und hergestaltet, dass der Kolben im Pneumatikzylinder im wesentlichen in der Zwischenstellung verharrt oder um die Zwischenstellung oder um einen Mittelwert der Zwischenstellung oszilliert.

Die Frequenz wird dabei in Abhängigkeit von dem Gesamtsystem, insbesondere der Trägheit des Systems, die insbesondere von der Trägheit der bewegten Masse abhängt, den Reibungsverhältnissen, der Federstärke der verwendeten Rückführfeder etc., so hoch gewählt, dass eine Zwischenstellung des Pneumatikzylinders in einem im wesentlichen konstanten Niveau über einen bestimmbaren Zeitraum einstellbar ist. In einem Idealfall kann die Zwischenstellung des Pneumatikzylinders dabei über einen bestimmbaren und regelbaren Zeitraum tatsächlich, innerhalb von Messtoleranzen, konstant sein, es ist jedoch auch möglich, dass der Pneumatikzylinder um einen bestimmten Mittelwert, der der Zwischenstellung des Pneumatikzylinders entspricht, oszilliert, wobei die Frequenzen der Oszillation sowie die Oszillationsamplitude unterschiedlich sein können.

Bei einer bevorzugten Ausführungsform sind dabei die Verhältnisse zwischen Frequenz und Gesamtsystem, insbesondere der Trägheit des Gesamtsystems, so gewählt, dass ein eventuelles Schwanken oder Oszillieren des Pneumatikzylinders um einen einzustellenden Wert der Zwischenstellung so gering ist, dass eine solche Oszillation nicht messbar ist beziehungsweise innerhalb von Messtoleranzen liegt oder zumindest bei dem zu regelnden System ohne Bedeutung ist. Je höher dabei die Frequenz im Verhältnis zu Massenträgheit und zur Reibung des Systems ist, desto geringer ist das Ausmaß der Oszillation des Systems um die gewünschte Zwischenstellung und desto kleiner ist die entsprechende Oszillationsamplitude. Eine eventuell vorliegende Oszillationsfrequenz entspricht in der Regel im wesentlichen der Frequenz der Regelungssteuerung des Ventilsystems, das heißt der Frequenz, mit der das Ventilsystem zwischen seinen beiden Betriebsstellungen "Zuführen" und "Abführen" geschaltet wird.

Bei den bevorzugten Verfahren beträgt die Frequenz zum Schalten des Ventilsystems zwischen den beiden Betriebsstellungen mindestens 50 Hz, wobei bevorzugt Frequenzen von mindestens 100 Hz, besonders bevorzugt von mindestens 150 Hz, und, bei besonders empfindlichen Systemen beziehungsweise hohen gewünschten Regelungsgenauigkeiten, Frequenzen von mindestens 200 Hz oder 250 Hz verwendet werden.

Die gewählten Frequenzen hängen insbesondere von der Leistungsfähigkeit des eingesetzten Ventilsystems ab, in der Regel liegen die Frequenzen des Ventilsystems nicht über 500 Hz, jedoch soll darauf hingewiesen werden, dass grundsätzlich auch höherfrequente Ventilsysteme und Steuerungsregelungen eingesetzt werden können, um das erfindungsgemäße Verfahren zu realisieren, insbesondere da in der Zukunft damit zu rechnen ist, dass auch noch schnellere Ventilsysteme entwickelt werden können, die mit höheren Frequenzen getaktet werden können.

Die minimale, bevorzugt variabel einstellbare, Frequenz hängt insbesondere von der gewünschten Genauigkeit ab, wobei durchaus auch merkliche Oszillationsbewegung und Oszillationsamplituden vorhanden sein können, wenn diese Schwankungen für das System, für das das erfindungsgemäße Verfahren eingesetzt wird, akzeptabel sind.

Bei einer bevorzugten Ausführungsform beträgt die Oszillationsamplitude maximal 5% des Hubs des Zylinders, wobei besonders bevorzugt die Oszillationsamplituden, durch eine Wahl einer höheren Frequenz des Systems, geringer gehalten werden und insbesondere maximal 2% oder sogar nur maximal 1% des Hubs des Zylinders betragen. Besonders empfindliche Steuerungssysteme führen bei der Einstellung einer Zwischenstellung des Pneumatikzylinders lediglich zu sehr geringen Schwankungen und Oszillationsamplituden, die maximal 0,5% des Hubs des Zylinders ausmachen. Bei entsprechender Wahl der Masse, der Reibung und der gewählten Frequenz geht die Oszillationsamplitude bevorzugt gegen Null.

Als Ventilsysteme können unterschiedliche Systeme eingesetzt werden, die zwei Betriebsstellungen, nämlich die oben beschriebenen Betriebsstellungen "Zuführen" und "Abführen", aufweisen. Besonders geeignet ist als Ventilsystem ein 3/2 Wegeventil, das insbesondere dann bevorzugt ist, wenn ein dynamisches System mit häufig wechselnden Stellungen und Regelhüben erforderlich ist, insbesondere da ein 3/2 Wegeventil sehr kostengünstig ist und geringe Abmessungen aufweisen kann, so dass das Gesamtsystem klein gehalten werden kann.

Eine weitere Alternative für ein Ventilsystem ist das Vorsehen von zwei 2/2 Wegeventilen, wobei diese Lösung insbesondere dann bevorzugt ist, wenn der spezielle Anwendungsfall einen hohen Anteil an Kolbenzwischenstellungen mit geringen Störgrößen umfasst. Darüber hinaus werden bei einem solchen System die Lastspiele auf zwei Ventile für das Ein- und Ausfahren des Kolbens verteilt.

Insbesondere ist bevorzugt, dass ein Ventilsystem verwendet wird, das ausschließlich zwei Betriebsstellungen aufweist, nämlich die oben genannten Betriebsstellungen "Zuführen" und "Abführen", wie es beispielsweise automatisch bei dem oben genannten 3/2 Wegeventil der Fall ist. Ein solches Ventilsystem ist insbesondere sehr kostengünstig herzustellen und sehr fehlerunanfällig.

Bei einer bevorzugten Ausführungsform des erfindungsgemäßen Verfahrens wird das fluide Medium in der Betriebsstellung "Zuführen" mit einem Versorgungsdruck zugeführt, der bevorzugt zwischen 1 bar und 15 bar liegt, insbesondere bevorzugt zwischen 5 bar und 12 bar, wobei der Versorgungsdruck jedoch selbstverständlich abhängig von der Geometrie und Dimension des Pneumatikzylinders ist, sowie von den Charakteristiken des Gesamtsystems, insbesondere der gewünschten Schnelligkeit zur Einstellung des Pneumatikzylinders.

Das Vorsehen eines höheren Versorgungsdrucks ermöglicht eine schnellere Stufenregelung und eine höhere Kolbengeschwindigkeit, jedoch führt ein höherer Versorgungsdruck aufgrund der höheren Kolbengeschwindigkeit auch, bei ansonsten unveränderten Einstellungen und Systemkomponenten, zu größeren Oszillationsamplituden, so dass bei einer festgelegten maximalen Oszillationsamplitude mit erhöhtem Versorgungsdruck die Regelungsfrequenz des Ventilsystems erhöht werden muss. Besonders vorteilhaft sind daher Systeme, die sowohl einen hohen Versorgungsdruck aufweisen als auch eine hohe Regelungsfrequenz des Ventilsystems zur Verfügung stellen können, da in diesen Fällen einerseits eine besonders schnelle Schaltung und Veränderung der Schaltstellung des Pneumatikzylinders möglich ist, andererseits aber auch die Schwankungen und Oszillationsamplituden gering gehalten werden. Bei Gesamtsystemen mit geringeren Anforderungen sowohl im Hinblick auf die Schaltgeschwindigkeit als auch im Hinblick auf die Einstellgenauigkeit einer Zwischenstellung des Pneumatikzylinders, also im Hinblick auf das Ausmaß der oszillatorischen Bewegung, können auch geringere Versorgungsdrücke und geringere Frequenzen vorgesehen werden. Daraus ist direkt ersichtlich, dass in den Fällen, in denen eine hohe Reaktions- und Einstellgeschwindigkeit erforderlich ist, insbesondere der Versorgungsdruck erhöht wird, auch wenn dies gegebenenfalls "zu Lasten" der Minimierung der Oszillation geht, umgekehrt in Fällen, in denen keine extrem schnell einstellenden Pneumatikzylinder erforderlich sind, der Versorgungsdruck geringer gewählt werden kann, um bei gleichbleibender Schalt- bzw. Steuerungsfrequenz nach wie vor hohe Genauigkeiten und geringe Oszillationsbewegungen zu erzielen.

In diesem Zusammenhang sollte auch darauf hingewiesen werden, dass die Regelung des Pneumatikzylinders selbstverständlich nicht nur von dem Versorgungsdruck einerseits abhängig ist, der für die Betriebsstellung "Zuführen" von Bedeutung ist, sondern auch von der Federkraft der Rückführfeder und der Durchsatzkapazität der entsprechenden Öffnungen und Leitungen des Pneumatikzylinders für das Abführen des fluiden Mediums in der Betriebsstellung "Abführen".

Bei einer besonders bevorzugten Ausführungsform ist ferner vorgesehen, die Stellung des Pneumatikzylinders in regelmäßigen Zeitabschnitten, beispielsweise mittels eines Wegesensors, zu messen. Die vom Wegesensor zur Verfügung gestellten Daten ermöglichen eine Rückkopplung zur Steuerungsregelung, so dass aufgrund der Daten des Wegesensors eine genauere und exaktere Regelung des Ventilsystems möglich ist. Auch ermöglicht ein solcher Wegesensor, im Gegensatz zu festgelegten Steuerungen beispielsweise anhand einer vorher festgelegten "Regelungskurve", die beispielsweise in Testverfahren oder empirisch ermittelt werden kann, auch eine Anpassung auf Veränderungen des Gesamtsystems, beispielsweise aufgrund eines Verschleißens des Systems während der Nutzungsdauer, was beispielsweise zu einer Veränderung der Reibungswerte führen kann.

Ferner ist es auch möglich, zusätzlich zu einem Wegesensor oder anstelle eines Wegesensors andere Sensoren vorzusehen, die unterschiedliche Regelgrößen des Systems messen, beispielsweise einen Druck, eine Temperatur, einen Volumenstrom oder, je nach Anwendungsgebiet des Pneumatikzylinders, beispielsweise Abgaswerte wie NOₓ oder ähnliches. Es ist dabei möglich, mehrere Sensoren zu kombinieren, oder aber, in einem einfacheren System, wie oben erläutert, auch ohne jegliche Sensoren zu arbeiten. Werden Sensoren eingesetzt, werden die Meßwerte dieser Sensoren bevorzugt von einer Steuerungsvorrichtung verarbeitet, beispielsweise durch einen Prozessor, woraufhin entsprechende Steuerimpulse an das Ventilsystem abgegeben werden.

Die Erfindung betrifft ferner einen Pneumatikzylinder mit stufenloser Stellungsregelung, der insbesondere ein Druckreservoir zum Bereitstellen eines fluiden Mediums, ein Ventilsystem zum Zuführen und Abführen des fluiden Mediums in den Pneumatikzylinder und aus diesem heraus umfasst, wobei das Ventilsystem zwei Betriebsstellungen aufweist, nämlich zum einen die Betriebsstellung "Zuführen" und zum anderen die Betriebsstellung "Abführen" des fluiden Mediums.

Erfindungsgemäß umfasst der Pneumatikzylinder ferner eine Steuervorrichtung zum Steuern des Ventilsystems, die so ausgelegt ist, dass es das Ventilsystem mit solch einer hohen Frequenz zwischen den beiden Betriebsstellungen hin- und herschalten kann, dass der Pneumatikzylinder im wesentlichen konstant in einer Zwischenstellung verharrt oder um diese Zwischenstellung oszilliert. Im Hinblick auf besondere Merkmale und Vorteile eines solchen Pneumatikzylinders wird insbesondere auf die obige Beschreibung eines entsprechenden erfinderischen Verfahrens verwiesen, das mit einem solchen Pneumatikzylinder durchgeführt werden kann.

Auch im Hinblick auf die bevorzugten Frequenzen, Oszillationsamplituden und im Hinblick auf den Einsatz besonders bevorzugter Ventilsysteme, insbesondere dem Einsatz eines 3/2 Wegeventils oder dem Einsatz von zwei 2/2 Wegeventilen, wird zur Vermeidung von Wiederholungen ebenfalls auf die obige Beschreibung verwiesen.

Bevorzugt umfasst der Pneumatikzylinder ferner einen Wegesensor, wobei dieser Wegesensor bevorzugt durch einen Sensor realisiert wird, der auf dem induktiven Prinzip beruht. Es sind jedoch auch anderen Sensoren denkbar, beispielsweise ein Hall Sensor, ein PLCD Sensor, ein kapazitiver Sensor, ein optischer Sensor oder auch ein Potentiometer. Bevorzugt werden insbesondere berührungslose oder verschleißarme beziehungsweise verschleißfreie Sensoren eingesetzt.

Der Pneumatikzylinder ist bei einer bevorzugten Ausführungsform insbesondere so ausgebildet, daß er eine sehr kompakte Dimensionierung aufweist. Bei einer bevorzugten Ausführungsform sind dabei das oder die Ventile und/oder zugehörige Ventilelemente als integraler Baustein ausgebildet, wobei sämtliche Elemente des Ventilsystems bevorzugt in einem gemeinsamen Gehäuse untergebracht sind. Bei einer weiteren Ausführungsform sind auch weitere Elemente des erfindungsgemäßen Pneumatikzylinders, beispielsweise die Steuervorrichtung zum Steuern des Ventilsystems, ebenfalls in dem integralen Bauteil enthalten und bevorzugt auch innerhalb desselben Gehäuses untergebracht. Mit diesen Ausführungsformen können besonders kompakte und kleine Elemente realisiert werden, was bei einem Einbau, beispielsweise im Kfz-Bereich, besonders vorteilhaft ist.

Die Erfindung betrifft ferner insbesondere eine Motorbremse, eine Turboladerverstellung sowie ein Abgasrückführungssystem mit einem erfindungsgemäßen Pneumatikzylinder, wie er oben beschrieben worden ist. Insbesondere in diesem Bereich zeigen sich erhöhte Vorteile des erfindungsgemäßen Verfahrens und des erfindungsgemäßen Pneumatikzylinders, insbesondere aufgrund der hierdurch ermöglichten kleinen Bauweise. Auch können das erfindungsgemäße Verfahren und der erfindungsgemäße Pneumatikzylinder insbesondere auch problemlos in heißen Abgasbereichen innerhalb eines Kraftfahrzeugs eingesetzt werden.

Weitere Einzelheiten der vorliegenden Erfindung werden anhand der beigefügten Zeichnungen und der nachfolgenden Beschreibung noch deutlicher werden.

Es zeigen:
- Fig. 1: eine schematische Darstellung einer ersten Ausführungsform eines erfindungsgemäßen Pneumatikzylinders;
- Fig. 2: eine schematische Darstellung einer zweiten Ausführungsform eines erfindungsgemäßen Pneumatikzylinders;
- Fig. 3: eine schematische Darstellung einer Ausführungsform einer erfindungsgemäßen Motorbremsklappe oder Abgasrückführungsklappe; und
- Fig. 4: eine schematische Darstellung einer Ausführungsform einer erfindungsgemäßen Turboladersteuerung.

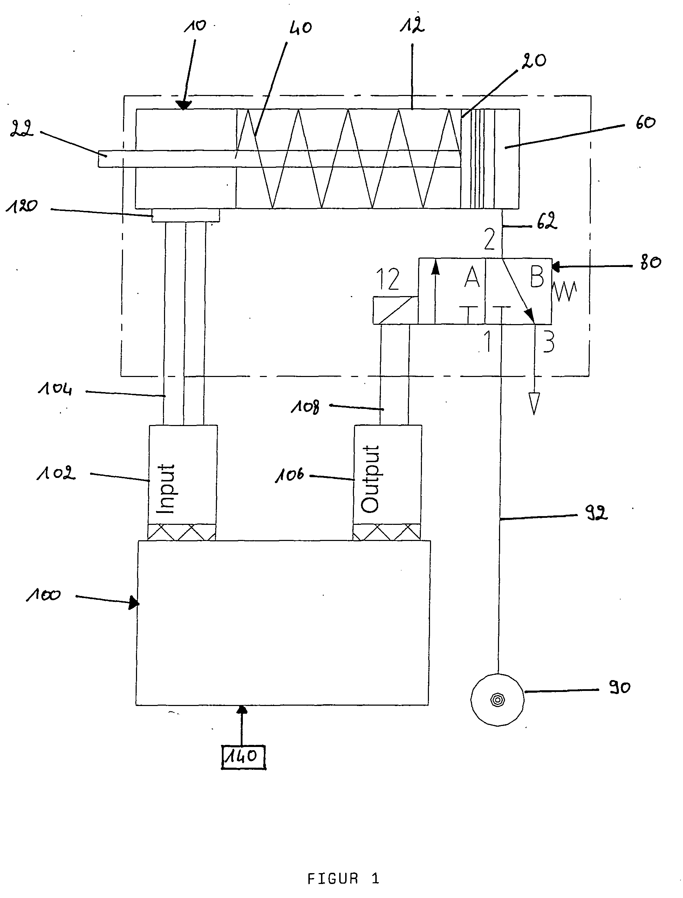

Figur 1 zeigt schematisch eine erste Ausführungsform eines erfindungsgemäßen Systems mit einem Pneumatikzylinder 10, der einen Kolben 20 umfasst, der mittels einer Rückführfeder 40 vorgespannt ist. Der Zylinder 12 des Pneumatikzylinders 10 schließt mit dem Kolben 20 einen Druckraum 60 ein, wobei das Volumen des Druckraums 60 durch die Bewegung des Kolbens 20 im Zylinder 12 des Pneumatikzylinders 10 variiert. Eine Kolbenstange 22 des Kolbens 20 führt auf zumindest einer Seite aus dem Zylinder 12 heraus und ist an ein zu steuerndes System, beispielsweise eine Motorbremse, eine Turboladerverstellung oder auch eine Abgasrückführung, grundsätzlich aber auch an jedes beliebige andere System, anschließbar, so dass über die Stellung des Pneumatikzylinders 10, das heißt über die Stellung des Kolbens 20 in dem Pneumatikzylinder 10, bestimmte vorgebbare Stellungen beziehungsweise Einstellungen des zu steuernden Systems geregelt werden können.

Das System umfasst ein Ventilsystem 80, wobei es sich bei dem Ventilsystem 80 in dieser Ausführungsform um ein 3/2 Wegeventil handelt, das lediglich zwei Betriebsstellungen aufweist, nämlich die Betriebsstellung "Zuführen", in Figur 1 mit dem Buchstaben A gekennzeichnet, und die Betriebsstellung "Abführen", die in Figur 1 mit dem Buchstaben B gekennzeichnet ist. Wie in Figur 1 ersichtlich ist, befindet sich das Gesamtsystem in der Betriebsstellung B, also "Abführen", bei der ein fluides Medium, in der hier gezeigten Ausführungsform Druckluft, aus dem Druckraum 60 über eine Leitung 62 und durch das Ventil 80 nach außen abgeführt werden kann.

Wie ebenfalls in Figur 1 deutlich ersichtlich, umfasst das System auch eine Versorgungsquelle 90 für das fluide Medium, hier eine Druckluftquelle, die über eine Leitung 92 mit dem Ventilsystem 80 verbunden ist.

Bei der in Figur 1 gezeigten Stellung des Ventilsystems 80, nämlich in der Betriebsstellung "Abführen", führt jedoch die Versorgungsleitung 92 von der Versorgungsquelle 90 in ein totes Ende des Ventilsystems 80, so dass die Versorgungsquelle 90 abgeschlossen ist.

In der Betriebsstellung B, nämlich "Abführen", drückt daher die Rückholfeder 40 auf den Kolben 20 des Pneumatikzylinders 10, so dass sich dieser, in Bezug auf die Darstellung in Figur 1, nach rechts bewegt, so dass der Druckraum 60 verkleinert wird und das fluide Medium, in diesem Falle die Druckluft, über die Leitung 62 und das Ventil 80 in einen Freiraum befördert wird.

Das Ventilsystem 80 wird über eine Steuervorrichtung 100 gesteuert, die einen Ausgangsanschluss 106 aufweist, der wiederum über Leitungen 108 mit dem Ventilsystem 80 verbunden ist, so dass über die Steuervorrichtung 100 die jeweilige Betriebsstellung des Ventilsystems 80 ausgewählt werden kann.

Die Steuervorrichtung 100 kann prinzipiell beispielsweise automatische Abläufe regeln, die in der Steuervorrichtung 100 selbst gespeichert sind, es ist jedoch auch möglich, dass sie von extern Steuerbefehle entgegennimmt, beispielsweise über eine Befehleingabevorrichtung 140, mit der, beispielsweise von einem Nutzer des Gesamtsystems, bestimmte Anforderungen an das Gesamtsystem gestellt werden, die von der Steuervorrichtung 100 bearbeitet und in Steuerungsbefehle umgesetzt werden, die dann über den Ausgangsanschluss 106 und die Leitung 108 das Ventilsystem 80 weitergeleitet werden und dieses steuern.

Ferner ist es möglich, dass die Steuervorrichtung 100 bestimmte Kennlinien/Kennfelder und Daten enthält, die beispielsweise empirisch ermittelt worden sind und die einen Zusammenhang zwischen der Steuerung des Ventilsystems 80, also der Regelung der Einstellungen der Betriebsstellungen des Ventilsystems 80 und/oder dem Wechsel und der Frequenz zwischen den einzelnen Betriebsstellungen, mit den möglichen Stellungen des Pneumatikzylinders 10, also des Kolbens 20 in dem Zylinder 12, herstellt.

Bei der in Figur 1 gezeigten Ausführungsform umfasst das System zusätzlich einen Wegesensor 120, der die Stellung des Kolbens 20 in dem Zylinder 12 des Pneumatikzylinders 10 in regelmäßigen, bevorzugt sehr kurzen Zeitabständen, misst, wobei die Messdaten des Wegesensor 120 über Leitungen 104 und einen Eingangsanschluss 102 in die Steuervorrichtung 100 eingegeben werden, so dass aufgrund dieser zusätzlichen Daten, gegebenenfalls in Zusammenhang mit den externen Befehlen, die über die Befehleingabevorrichtung 140 in die Steuervorrichtung 100 eingegeben werden, eine exakte Steuerung des Gesamtsystems und insbesondere des Ventilsystems 80 ermöglicht wird.

Als Wegesensor ist bei dieser Ausführungsform ein induktiver Sensor vorgesehen. Die Zeitabstände, mit denen der Wegesensor Positionen des Kolbens 20 ausliest und an die Steuervorrichtung 100 weitergibt, sind variabel wählbar, je nach Anforderungen des Gesamtsystems und der Genauigkeit des Systems, sie liegen bei der hier gezeigten Ausführungsform zwischen 1 ms und 5 ms insbesondere bei etwa 2 ms. Die Zeitabstände, in denen die Meßdaten bereitgestellt werden, können jedoch auch andere Werte annehmen, insbesondere können Sie kürzer sein. Bei einer anderen Ausführungsform ist es ferner möglich, daß die Meßdaten auch kontinuierlich beziehungsweise quasi-kontinuierlich zur Verfügung gestellt werden.

Der Pneumatikzylinder 10 der in Figur 1 gezeigten Ausführungsform hat einen Zylinderdurchmesser von 30 mm und einen Hub von 30 mm, wobei die Federkonstante der Rückführfeder 40 zwischen 1 N/mm und 15 N/mm liegt, bevorzugt bei etwa 5 bis 8 N/mm.

Der Versorgungsdruck der Versorgungsquelle 90 liegt bei dieser Ausführungsform zwischen 6 und 12 bar, in der Regel bei ca. 8 bar, wobei der Druck im Zylinder, je nach Betriebsstellung und Betriebssituation, zwischen 0 und 12 bar liegt.

Mit einer solchen Konfiguration wird eine Kolbengeschwindigkeit von mehr als 0,3 m/s erreicht, so dass ein vollständiger Hub innerhalb von 0,1 s durchgeführt werden kann.

An dieser Stelle soll darauf hingewiesen werden, dass selbstverständlich andere Dimensionierungen des Systems möglich sind, ohne vom Gegenstand der vorliegenden Erfindung abzuweichen.

Das Ventilsystem 80 und die Steuervorrichtung 100 sind so ausgewählt, dass das Ventilsystem 80 zwischen den beiden möglichen Betriebsstellungen mit einer Frequenz von bis zu 200 Hz geschaltet werden kann. Selbstverständlich ist es möglich, dass die Steuervorrichtung 100 das Ventilsystem 80 mit einer geringeren Frequenz ansteuert, beispielsweise bis zu 100 Hz, wenn diese Frequenz für die geforderte Genauigkeit des Gesamtsystems, insbesondere im Hinblick auf die Oszillationsbewegung in einer Zwischenstellung, ausreicht, wobei auf diese Weise auch der Verschleiß des Ventilsystems 80 gemindert werden kann.

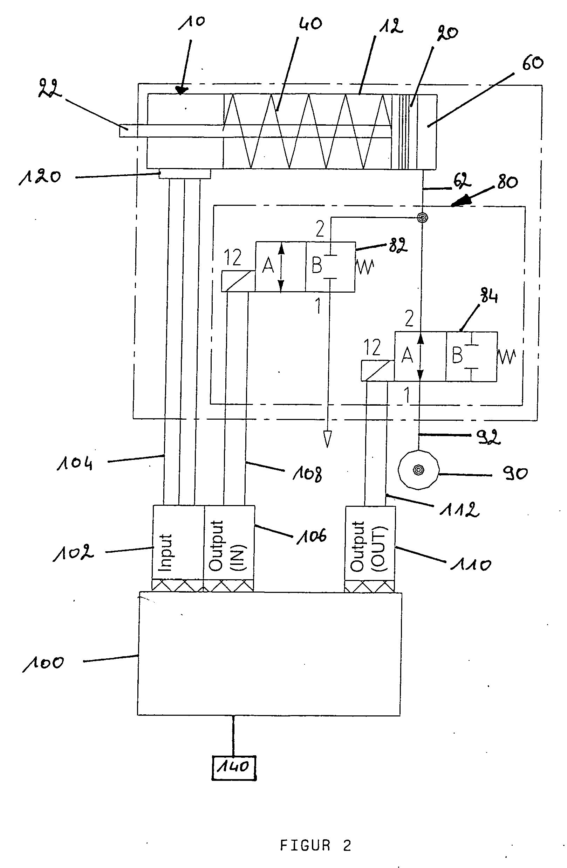

Figur 2 zeigt schematisch eine weitere Ausführungsform eines erfindungsgemäßen Systems, das dem in Figur 1 gezeigten System sehr ähnlich ist, so dass auf die obige Beschreibung zu Figur 1 verwiesen wird. Gleiche oder ähnliche Bauteile und Bauelemente sind mit identischen Bezugszeichen versehen.

Im Gegensatz zu der in Figur 1 gezeigten Ausführungsform umfasst das Ventilsystem 80 der zweiten Ausführungsform jedoch zwei 2/2 Wegeventile 82 und 84, die über eine Versorgungsleitung 62 mit dem Druckraum 60 des Pneumatikzylinders 10 verbunden sind.

Das Ventilsystem 80 arbeitet ähnlich wie das 3/2 Wegeventil, das im Hinblick auf die erste Ausführungsform in Figur 1 beschrieben worden ist, wobei die Betriebsstellung "Zuführen" dadurch realisiert wird, dass sich das 2/2 Wegeventil 82 in der Stellung B befindet, während sich das 2/2 Wegeventil 84 in der Betriebsstellung A befindet, so dass ein fluides Medium, auch in dieser Ausführungsform Druckluft, über die Versorgungsquelle 90, die Versorgungsleitung 92, durch das Ventil 84 und die Versorgungsleitung 62 dem Druckraum 60 zugeführt werden kann, während die Versorgungsleitung 62 bei ihrem Anschluss in das 2/2 Wegeventil 82 in ein totes Ende läuft, so dass hierdurch kein fluides Medium entweichen kann.

Bei der Betriebsstellung "Abführen" befindet sich das Ventil 82 in der Stellung A, so dass Druckluft aus dem Druckraum 60 über die Versorgungsleitung 62 und durch das Ventil 82 nach außen entweichen kann, während sich das Ventil 84 in der Stellung B befindet, so dass die Versorgungsquelle 90 nicht mit der Versorgungsleitung 62 und dem Druckraum 60 in Verbindung steht.

Das Ventilsystem 80 befindet sich daher bei der in Fig. 2 gezeigten Stellungen der Ventile 82,84 in der Betriebsstellung "Zuführen".

Beide 2/2 Wegeventile 82 und 84 werden über Ausgangsanschlüsse 106 und 110 und Leitungen 108 und 112 von der Steuervorrichtung 100 gesteuert.

Wie auch bei der in Figur 1 gezeigten Ausführungsform umfasst der Pneumatikzylinder 10 einen Wegesensor 120, wobei es sich bei dem Wegesensor in dieser Ausführungsform um einen potentiometrischen Sensor handelt. Das Gesamtsystem, insbesondere die Steuervorrichtung 100 und das Ventilsystem 80, sind bei dieser Ausführungsform so ausgelegt, dass Frequenzen bis maximal 250 Hz eingesetzt werden können. Wie auch in Zusammenhang mit der in Figur 1 dargestellten Ausführungsform beschrieben, können diese Frequenzen jedoch auch vermindert werden, wenn die Anforderungen an das Gesamtsystem dies zulassen. Selbstverständlich sind auch höherfrequente Systeme denkbar, ohne vom Gegenstand der vorliegenden Erfindung abzuweichen.

Der Pneumatikzylinder 10 der zweiten Ausführungsform hat einen Zylinderdurchmesser von 40 mm und einen Hub von 35 mm, wobei die Federkonstante der Rückführfeder 40 ca. 12 N/mm beträgt.

Der Versorgungsdruck der Versorgungsquelle 90 liegt zwischen 6 und 15 bar, bevorzugt bei ca. 8 bar, wobei der Druck im Zylinder beziehungsweise im Druckraum 60 zwischen 3 und 10 bar liegt.

Es soll an dieser Stelle nochmals darauf hingewiesen werden, dass es für den Fachmann selbstverständlich möglich ist, sämtliche Dimensionierungen des Pneumatikzylinders an die jeweils gewünschten Systeme anzupassen, ohne vom Gegenstand der vorliegenden Erfindung abzuweichen.

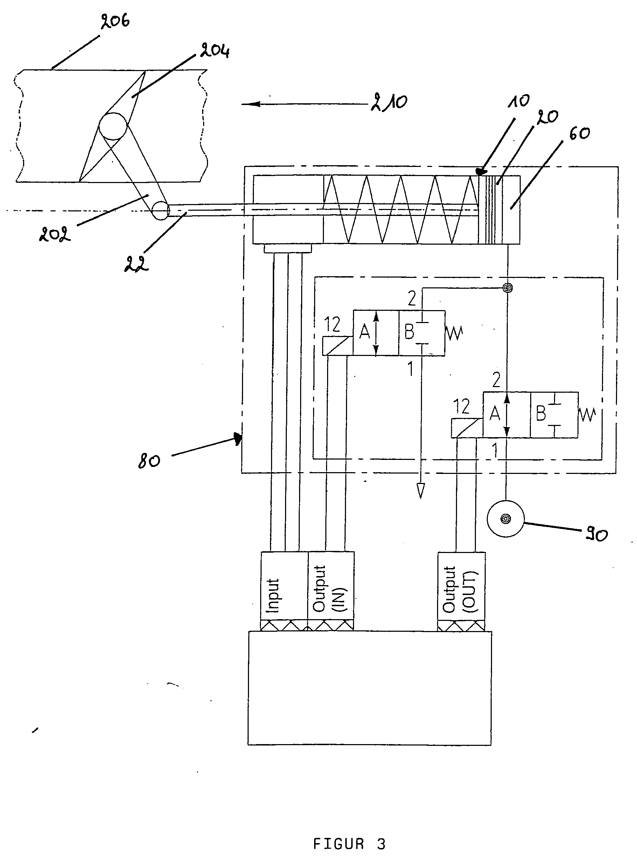

Figur 3 zeigt eine Ausführungsform einer erfindungsgemäßen Motorbremsklappe oder einer Abgasrückführungsklappe. Die in Fig. 3 gezeigte Motorbremsklappe verwendet dabei ein Pneumatikzylindersystem mit einem Ventilsystem, wie es in Fig. 2 gezeigt ist, daher wird, um Wiederholungen zu vermeiden, voll umfänglich auf die Fig. 2 und die zugehörige Beschreibung verwiesen.

Wie deutlich in Fig. 3 gezeigt ist, ist die Kolbenstange 22 des Kolbens 20 über eine Verbindung 202 mit einer Verstellklappe 204 verbunden, wobei die Verstellklappe 204, die in Fig. 3 in einer vollständig geschlossenen Position gezeigt ist, über die Bewegung der Kolbenstange 22, und damit über das Ventilsystem, das in Zusammenhang mit Fig. 2 beschrieben worden ist, in verschiedene Positionen eingestellt werden kann, so daß ein Abgasstrom 210, der durch eine Führung 206, in Fig. 3 von rechts nach links, durch den Pfeil gekennzeichnet, geführt wird, geregelt werden kann.

Die in Fig. 3 schematisch gezeigten Elemente sind für eine Motorbremsklappe und eine Abgasrückführungsklappe identisch, so daß sich die Fig. 3 auf beide Systeme bezieht, grundsätzlich kann eine solche oder ähnliche Steuerung jedoch auch für weitere Systeme eingesetzt werden.

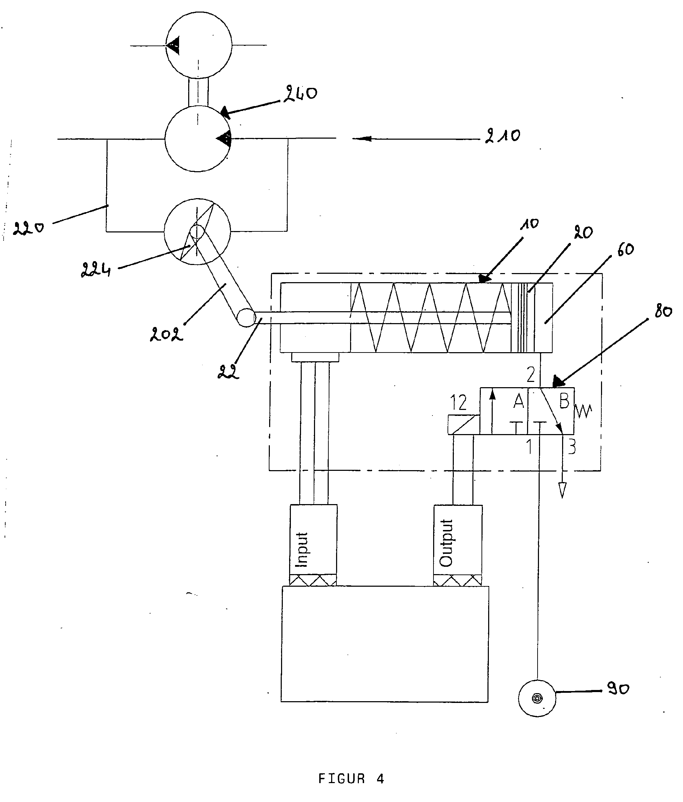

Fig. 4 zeigt eine Ausführungsform einer erfindungsgemäßen Turboladersteuerung, die einen Pneumatikzylinder und ein Ventilsystem verwendet, wie es in Fig. 1 gezeigt und in Zusammenhang mit Fig. 1 beschrieben wird, so daß, um Wiederholungen zu vermeiden, auf die entsprechende obige Beschreibung zur Fig. 1 verwiesen wird.

Bei einem solchen System wird ein Abgasstrom 210, der über einen Turbolader die Verdichterstufe antreibt, einer in Fig. 4 nur schematisch gezeigten Arbeitsturbine 240 zugeleitet.

Im Bedarffall kann der Abgasstrom über einen Bypass 220 an der Arbeitsturbine vorbeigeleitet werden, um deren Leistung zu minimieren.

Ob der Bypass 220 für den Abgasstrom passierbar ist oder nicht, wird durch die Verstellvorrichtung 224 bestimmt, deren Position wiederum durch die Verbindung 202 mit der Kolbenstange 22 des Pneumatikzylinders 10 und damit über das Ventilsystem einstellbar ist, wie es in Zusammenhang mit Fig. 1 beschrieben worden ist.

In Zusammenhang mit den Fig. 2 und 3 soll an dieser Stelle darauf hingewiesen werden, daß nicht sämtliche Schaltelemente in ihrem spannungslosen Zustand bzw. in der Grundstellung gezeichnet sind. Vielmehr ist zur Verdeutlichung des Systems in Fig. 2 das Ventil 84 nicht in einer Grundstellung gezeichnet, so daß sich ein Ventil, nämlich das Ventil 82, in seinem Verriegelungszustand befindet, während sich das andere Ventil, nämlich Ventil 84, in seiner Durchgangsstellung befindet. Analoges gilt für Fig. 3, in der die Ventile eine identische Stellung haben, wie in Fig. 2 gezeigt und erläutert. Das in den Figuren 2 und 3 gezeigte Ventilsystem befindet sich daher in der Betriebsstellung "Zuführen", wie oben erläutert.

### BEZUGSZEICHENLISTE

- 10: Pneumatikzylinder
- 12: Zylinder
- 20: Kolben
- 22: Kolbenstange
- 40: Rückführfeder
- 60: Druckraum
- 62: Versorgungsleitung
- 80: Ventilsystem
- 82: 2/2 Wegeventil
- 84: 2/2 Wegeventil
- 90: Versorgungsquelle
- 92: Versorgungsleitung
- 100: Steuervorrichtung
- 102: Eingangsanschluss
- 104: Leitungen
- 106: Ausgangsanschluss
- 108: Leitungen
- 110: Ausgangsanschluss
- 112: Leitungen
- 120: Wegesensor

## Patentansprüche

1. Verfahren zur stufenlosen Stellungsregelung eines Pneumatikzylinders (10), bei dem die Stellung des Kolbens (20) im Pneumatikzylinders (10) über seinen Betriebsweg zwischen zwei Endstellungen durch ein Zuführen und Abführen eines fluiden Mediums gesteuert wird,
**dadurch gekennzeichnet, dass**
das Zuführen und Abführen des fluiden Mediums über ein Ventilsystem (80; 82, 84) erfolgt, das zwei Betriebsstellungen "Zuführen" und "Abführen" aufweist, wobei zum Einstellen einer Zwischenstellung des Pneumatikzylinders (10) auf einen beliebigen Hub zwischen den Endstellungen über einen bestimmbaren Zeitraum das Ventilsystem (80; 82, 84) mit solch einer hohen Frequenz zwischen den beiden Betriebsstellungen hin- und hergeschaltet wird, dass der Pneumatikzylinder (10) im wesentlichen konstant in der Zwischenstellung verharrt oder um die Zwischenstellung oszilliert.

2. Verfahren nach Anspruch 1, **dadurch gekennzeichnet, dass** die Frequenz zum Schalten zwischen den beiden Betriebsstellungen mindestens 50 Hz, bevorzugt mindestens 100 Hz, insbesondere mindestens 150 Hz beträgt.

3. Verfahren nach einem der vorhergehenden Ansprüche, **dadurch gekennzeichnet, dass** eine Oszillationsamplitude maximal 5% des Hubs des Zylinders (12), bevorzugt maximal 2% des Hubs des Zylinders (12) beträgt.

4. Verfahren nach einem der vorhergehenden Ansprüche, **dadurch gekennzeichnet, dass** als Ventilsystem (80) ein 3/2 Wegeventil oder zwei 2/2 Wegeventil (82,84) verwendet wird.

5. Verfahren nach einem der vorhergehenden Ansprüche, **dadurch gekennzeichnet, dass** zum Zuführen des fluiden Mediums ein Versorgungsdruck vorgesehen ist, der zwischen 1 bar und 15 bar liegt.

6. Verfahren nach einem der vorhergehenden Ansprüche, **dadurch gekennzeichnet, dass** zur Steuerung des Systems die Stellung des Pneumatikzylinders (10) in regelmäßigen Zeitabständen mittels eines Wegesensors (120) gemessen wird.

7. Verfahren nach einem der vorhergehenden Ansprüche, **dadurch gekennzeichnet, dass** zur Steuerung des Systems ein oder mehrere Parameter gemessen werde, die als Regelgrößen herangezogen werden.

8. Pneumatikzylinder (10) mit stufenloser Stellungsregelung, der ferner umfaßt:
- ein Druckreservoir (90) zum Bereitstellen eines fluiden Mediums,
- ein Ventilsystem (80; 82, 84) zum Zuführen und Abführen des fluiden Mediums in den Pneumatikzylinder (10) oder aus diesem heraus, wobei das Ventilsystem (80; 82, 84) zwei Betriebsstellungen "Zuführen" und "Abführen" umfasst,
- eine Steuervorrichtung (100) zum Steuern des Ventilsystems (80; 82, 84), wobei Steuervorrichtung (100) und Ventilsystem (80; 82, 84) so ausgelegt sind, dass die Steuervorrichtung (100) das Ventilsystem (80; 82, 84) zum Einstellen einer Zwischenstellung des Pneumatikzylinders mit solch einer hohen Frequenz zwischen den beiden Betriebsstellungen hin- und herschalten kann, dass der Pneumatikzylinder (10) im wesentlichen konstant in der Zwischenstellung verharrt oder um die Zwischenstellung oszilliert.

9. Pneumatikzylinder nach Anspruch 8, **dadurch gekennzeichnet, dass** das Ventilsystem (80; 82, 84) und die Steuervorrichtung (100) so ausgelegt sind, dass eine Frequenz zum Hin- und Herschalten zwischen den beiden Betriebsstellungen von mindestens 50 Hz, bevorzugt von mindestens 100 Hz, insbesondere von mindestens 150 Hz erzielbar ist.

10. Pneumatikzylinder nach Anspruch 8 oder 9, **dadurch gekennzeichnet, dass** der Pneumatikzylinder (10) so ausgelegt ist, dass bei einer im wesentlichen konstanten Zwischenstellung des Pneumatikzylinders (10) oder einer Oszillation um die Zwischenstellung Oszillationsamplituden von maximal 5% des Hubs des Pneumatikzylinders (10), bevorzugt von maximal 2%, insbesondere bevorzugt von maximal 1 % des Hubs des Pneumatikzylinders (10) auftreten.

11. Pneumatikzylinder nach einem der Ansprüche 8 bis 10, **dadurch gekennzeichnet, dass** das Ventilsystem (80) ein 3/2 Wegeventil oder zwei 2/2 Wegeventile (82, 84) umfasst.

12. Pneumatikzylinder nach einem der Ansprüche 8 bis 11, **dadurch gekennzeichnet, dass** das Druckreservoir (90) für einen Versorgungsdruck zwischen 1 bar und 15 bar ausgelegt ist.

13. Pneumatikzylinder nach einem der Ansprüche 8 bis 12, **dadurch gekennzeichnet, dass** er ferner einen Wegesensor umfaßt.

14. Pneumatikzylinder nach einem der Ansprüche 8 bis 13, **dadurch gekennzeichnet, dass** er zusätzlich mindestens einen Sensor für einen Parameter des Gesamtsystems umfaßt.

15. Pneumatikzylinder nach einem der Ansprüche 8 bis 14, **dadurch gekennzeichnet, daß** mindestens das Ventilsystem als integrale Einheit ausgebildet ist und/oder Ventilsystem und Steuervorrichtung in einem gemeinsamen Gehäuse untergebracht sind.

16. Motorbremse mit einem Pneumatikzylinder mit stufenloser Stellungsregelung nach einem der Ansprüche 8 bis 15.

17. Turboladervorrichtung mit einem Pneumatikzylinder mit stufenloser Stellungsregelung nach einem der Ansprüche 8 bis 15.

18. Abgasrückführungssystem mit einem Pneumatikzylinder mit stufenloser Stellungsregelung nach einem der Ansprüche 8 bis 15.
